# EUROPEAN PATENT SPECIFICATION

(11) **EP 3 510 680 B1**
(45) Date of publication and mention of the grant of the patent: **17.06.2020**
(21) Application number: 17778346.1
(22) Date of filing: 08.09.2017
(51) Int. Cl.: H02G 3/06, H02G 15/007, H01R 13/59, H02G 15/013

(54) **CABLE GLAND DEVICE FOR THE ELECTRIC INTERCONNECTION OF ELECTRIC CABLES**
KABELVERSCHRAUBUNGSVORRICHTUNG ZUR ELEKTRISCHEN VERBINDUNG VON STROMKABELN
DISPOSITIF DE PRESSE-ÉTOUPE POUR L'INTERCONNEXION ÉLECTRIQUE DE CÂBLES ÉLECTRIQUES

(30) Priority: 09.09.2016 IT 201600091280
(43) Date of publication of application: 17.07.2019
(73) Proprietor: TECHNO GROUP S.r.l., 22070 Guanzate (CO) (IT)
(72) Inventor: GALLI, Sandro, 22070 Guanzate (CO) (IT)
(74) Representative: Brunacci, Marco
(86) International application number: PCT/IB2017/055424
(87) International publication number: WO 2018/047107

(56) References cited:
- EP-A1- 2 963 749
- WO-A1-2009/126411
- WO-A1-2015/050605
- US-A1- 2015 200 531

## Description

### Technical Field

The present invention relates to a cable gland device for the electric interconnection of electric cables.

### Background Art

In the field of electrical wiring devices cable gland devices are known comprising a substantially elongated first body provided with at least one opening for the passage of an electric cable and locking means adapted to prevent the axial sliding of the electric cable along the first body itself caused, e.g., by stresses due to external traction forces.

Generally, the cable gland locking means of known type have a second body consisting substantially of a fastening ring nut and an elastically deformable element.

The second body is screwed onto the first body and defines a truncated-cone surface which by acting on an elastically deformable element causes it to contract in a radial direction with respect to the longitudinal axis of the first body.

The contraction of the elastically deformable element on the electric cable causes the surface of the elastically deformable element itself to adhere to the electric cable preventing it from moving along the longitudinal axis of the first body.

The cable gland devices of known type have the main drawback of comprising a large number of components by means of which to obtain and ensure the locking of the electric cables inside the first body.

Consequently, the realization and assembly of such components implies high costs which in turn affect the retail price to the public.

Another drawback relates to the assembly operations of such plurality of components, with a relative risk of assembly errors by the operator and the realization of precarious and potentially hazardous connections.

The patent document EP1944844 A1 describes a different embodiment of the cable gland devices of known type wherein such cable gland devices can be coupled to electrical appliances in general and are provided with safety elements.

In the present case, the cable gland devices comprise a first body defining an electric cable passage channel.

Such first body has an ending part which can be fixed to an electric appliance in general and another ending part which defines tightening means onto the electric cable.

The cable gland device comprises an elastically yielding coating element made in a single body piece with the first body by co-molding and arranged at the tightening means.

Furthermore, the cable gland device comprises a second closure body which is provided with a hole defining the passage channel for the entry of the electric cable into the first body and which can be screwed to a portion of the first body itself.

The second body, once engaged with the first body, defines the tightening means of the electric cable to prevent it from moving along the longitudinal axis of the first body itself.

At the ending part of the first body, which engages with the second body, an elastically yielding coating element is provided made of thermoplastic rubber.

Such thermoplastic rubber layer goes to make up a single piece with the first body as it is over-molded at the ending part of the first body itself provided with elastically yielding tabs which, by engaging with the second body during the relative screwing to the first body, are tightened radially for locking the electric cable inserted in the passage channel.

Such cable gland devices, however, are susceptible to upgrading aimed at strengthening the degree of tightness so as to avoid, once the second body has been screwed to the first body, the electric cable being movable along the passage channel and the power connection of the electric cables being interrupted.

In the cases in which such cable gland devices undergo particularly intense external traction forces, the seal of the elastically yielding coating element and of the elastically yielding tabs may prove insufficient and not ensure the correct locking of the electric cable inside the first body.

Furthermore, the cable gland devices of known type are susceptible to upgrading aimed at the realization of devices as hermetically sealed as possible in order to ensure the insulation of the electric cable connections with respect to the outside environment in conditions of greater safety of use.

Other cable gland devices for the electric interconnection of electric cables are known from WO 2015/050605, WO 2009/126411 and US 2015/200531.

### Description of the Invention

The main aim of the present invention is to provide a cable gland device for the electric interconnection of electric cables which ensures utmost safety and seal of the locking of the electric cables along the longitudinal axis of the first body even in the case of severe operating conditions due, for example, to particularly intense external traction stresses, so as to ensure the correct connection of the electric cables.

Another object of the present invention is to provide a cable gland device for the electric interconnection of electric cables which allows to overcome the aforementioned drawbacks of the prior art within the ambit of a simple, rational, easy, efficient to use and cost-effective solution.

The aforementioned objects are achieved by the present cable gland device for the electric interconnection of electric cables according to claim 1.

### Brief Description of the Drawings

Other characteristics and advantages of the present invention will become more evident from the description of a preferred, but not exclusive, embodiment of a cable gland device for the electric interconnection of electric cables, illustrated by way of an indicative, but non-limiting example, in the attached drawings in which:

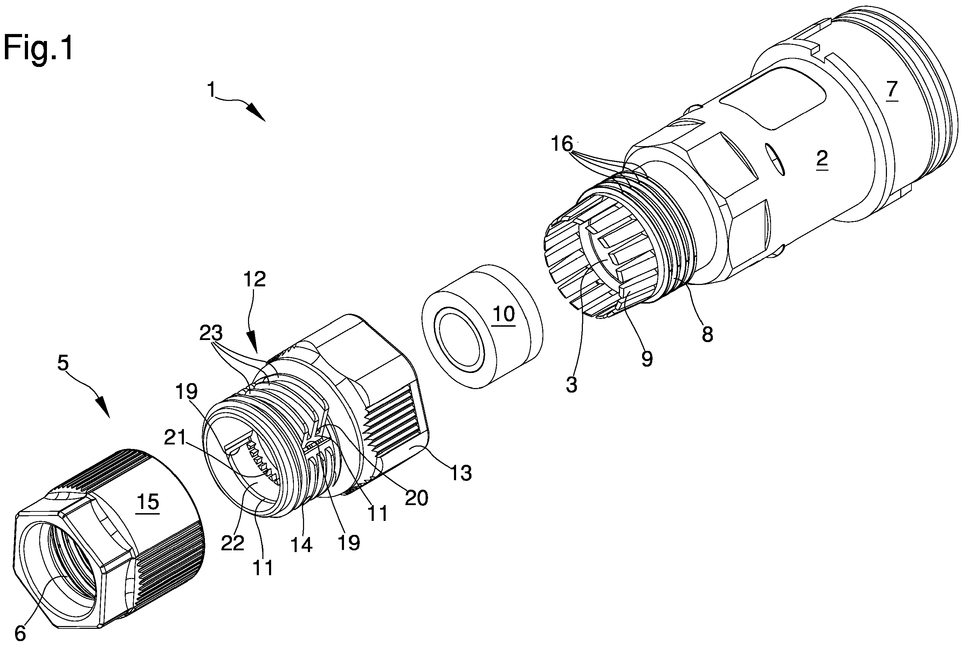

Figure 1 is an exploded view of a cable gland device according to the invention;

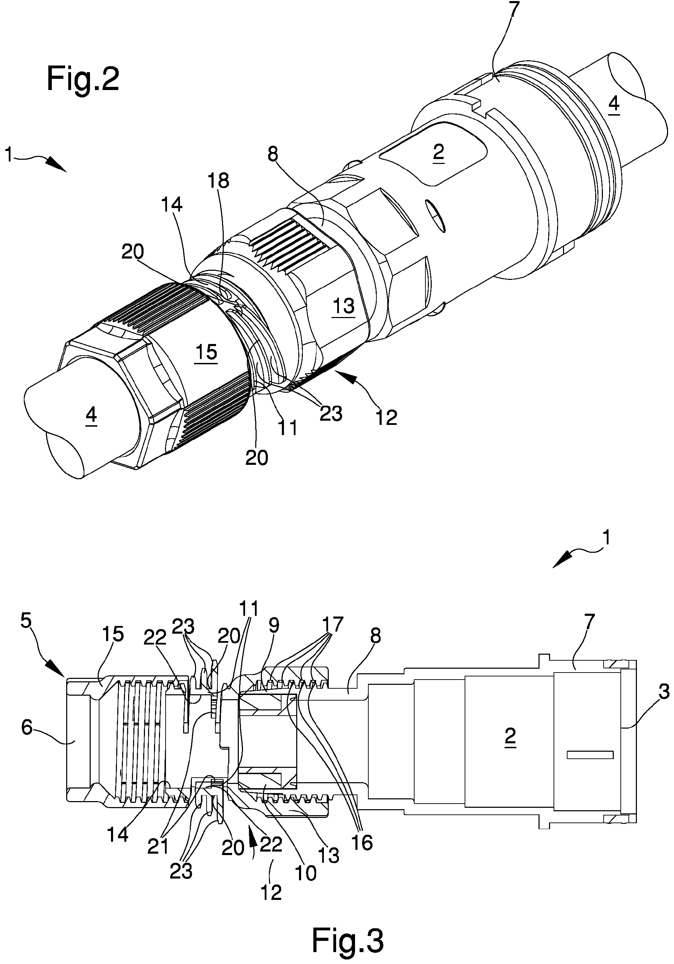

Figure 2 is an axonometric view of the cable gland device according to the invention wherein the second tightening means are in a free configuration;
Figure 3 is a sectional view of the cable gland device according to the invention wherein the second tightening means are in a free configuration;

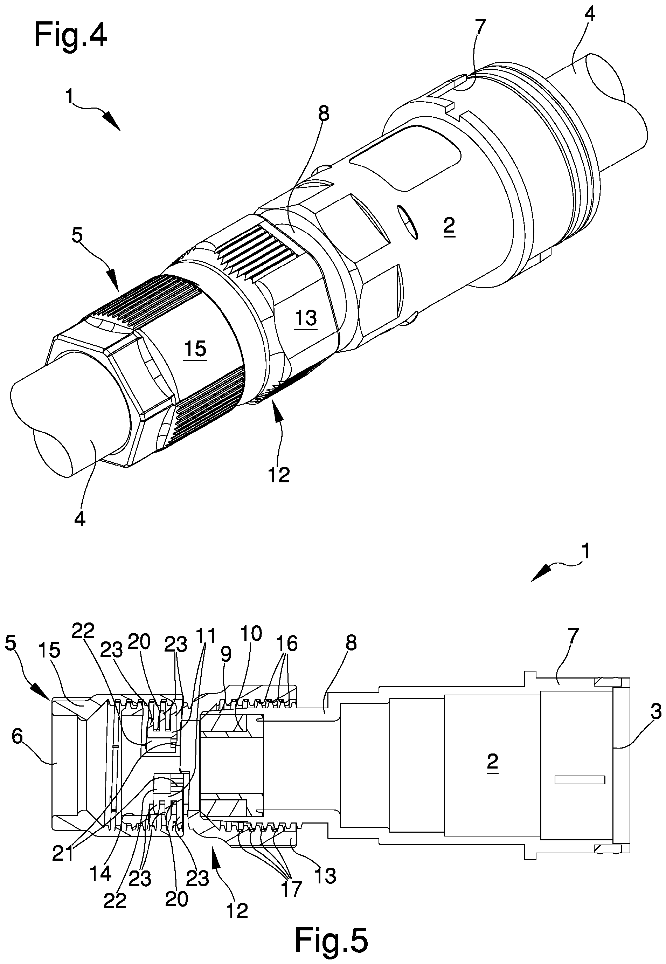

Figure 4 is an axonometric view of the cable gland device according to the invention wherein the second tightening means are in a locking configuration;
Figure 5 is a sectional view of the cable gland device according to the invention wherein the second tightening means are in a locking configuration.

### Embodiments of the Invention

With particular reference to these illustrations, reference numeral 1 globally indicates a cable gland device for the electric interconnection of electric cables. In the particular embodiment shown in the illustrations, the device 1 comprises:
- a first body 2 made of an electrically insulating material provided with:
   - a first passage channel 3 of at least an electric cable 4; and
   - first tightening means 9, 10 of the electric cable 4 inside the first passage channel 3;
- a second body 5 made of an electrically insulating material which comprises a second passage channel 6 of the electric cable 4 and is coupleable to the first body 2 for the activation of the first tightening means 9, 10.

More particularly, the first body 2 has a substantially cylindrical hollow conformation with circular section along which is defined the first passage channel 3 extending along the longitudinal axis of the first body itself.

The first body 2 comprises a first coupling portion 7, coupleable to the first coupling portion 7 of another complementary first body 2, and a second coupling portion 8, opposite the first coupling portion 7, which in this case is coupleable to the second body 5.

The first passage channel 3 is defined between the first coupling portion 7 and the second coupling portion 8.

Inside the first passage channel 3 one of a socket module and a plug module can be contained, each provided with respective pluralities of male or female terminals, to which respective electric cables 4 are connected.

In this case, the inner surface of the first body 2 may comprise means for engaging the socket or plug module at the first coupling portion 7.

In the case of the device 1 being coupled to another device 1, the first coupling portion 7 of one of the devices 1 has a conformation such as to allow coupling with the first coupling portion 7 of the other one of the devices 1 complementary to it.

It cannot however be ruled out that the first coupling portion 7 be associated, e.g., with a wall.

The first tightening means 9, 10 comprise a plurality of elastically yielding flanges 9 which extend parallel to the longitudinal axis of the first body 2.

Preferably, the first tightening means 9, 10 comprise an elastically deformable reducer element 10 arranged at the flanges 9 and adapted to adhere to the body of the relevant electric cable 4 so that the body of the electric cable 4 remains in a fixed position with respect to the flanges 9.

It cannot be ruled out that the first tightening means 9, 10 comprise a pair of concentric reducer elements 10, operable simultaneously depending on the difference between the diameter of the first passage channel 3 and the diameter of the electric cable 4, so that the reducer elements themselves adhere perfectly to the body of the electric cable 4.

Advantageously, the reducer element 10 is made of a thermoplastic elastomeric material, e.g., of the SEBS-TPEV type.

The first tightening means 9, 10 are therefore elastically deformable to regulate the diameter of the first passage channel 3 according to the diameter of the body of the electric cable 4 contained in the first passage channel itself.

In the preferred embodiment shown in the illustrations, the second body 5 comprises second tightening means 11 of the electric cable 4 inside the second passage channel 6.

More specifically, the second body 5 comprises:
- a first closure element 12 having:
   - a first stretch 13 coupleable to the first body 2 and adapted to activate the first tightening means 9, 10; and
   - a second stretch 14 having second tightening means 11;
- a second closure element 15 coupleable to the second stretch 14 and adapted to activate the second tightening means 11.

Within the scope of the present treatise, by the expression activation of the first tightening means and of the second tightening means is meant that, as the first stretch 13 gradually couples with the first body 2, the first tightening means 9, 10 are elastically deformable for keeping the electric cable 4 in a fixed position along the first passage channel 3 and the second passage channel 6 respectively, as well as for ensuring the correct electric connection with the electric cable 4 contained in another device 1.

Preferably, the first closure element 12 and the second closure element 15 have a substantially cylindrical hollow conformation with circular section inside which the second passage channel 6 is defined.

The second passage channel 6 extends along the longitudinal axis of the first closure element 12 and of the second closure element 15, which are substantially coincident with each other.

Conveniently, the second coupling portion 8 and the first stretch 13 have complementary threads for allowing the screwing of the first closure element 12 onto the first body 2 and, consequently, the activation of the first tightening means 9, 10.

More in detail, the outer surface of the second coupling portion 8 is provided with a thread which is in turn arranged below the first tightening means 9, 10, and more precisely below the flanges 9.

The inner surface of the first closure element 12, which defines the first stretch 13, is provided with a thread complementary to the thread of the outer surface of the second coupling portion 8 so that with the advancement of the screwing between the first closure element 12 and the second coupling portion 8 the activation occurs of the first tightening means 9, 10.

In the present case, as the first closure element 12 is gradually screwed onto the second coupling portion 8, the flanges 9 flex radially towards the longitudinal axis of the first body 2 and the reducer element 10 adheres more and more to the body of the electric cable 4, thus keeping it locked and in a fixed position with respect to the first passage channel 3.

Conveniently, the first body 2 comprises at least a first abutment protrusion 16 and the first stretch 13 comprises at least a second abutment protrusion 17; such abutment protrusions 16, 17 being adapted to operated in conjunction to one another to hinder the unscrewing of the first closure element 12 from the first body 2.

In particular, the first abutment protrusion 16 is defined at the thread of the second coupling portion 8, while the second abutment protrusion 17 is defined at the thread of the first stretch 13.

More in detail, the first abutment protrusion 16 is defined on each segment of the thread of the second coupling portion 8, while the second abutment protrusion 17 is defined at each of the pitches of the thread of the first stretch 13.

In the present case, by unscrewing the first closure element 12 from the first body 2, the first abutment protrusion 16 of each segment of the thread of the second coupling portion 8 comes into contact with the second abutment protrusion 17 defined between each pitch of the thread of the inner surface of the first stretch 13.

In other words, the friction generated between the first abutment protrusion 16 and the second abutment protrusion 17 is such as to hinder the unscrewing of the first closure element 12 from the first body 2, so as to ensure that the first tightening means 9, 10 remain activated.

Conveniently, the second closure element 15 and the second stretch 14 have complementary threads to allow the screwing of the second closure element 15 to the first closure element 12 and the consequent activation of the second tightening means 11.

In particular, first of all, the first closure element 12 is screwed onto the first body 2 for the activation of the first tightening means 9, 10, before proceeding in the same way with the screwing of the second closure element 15 onto the first closure element 12.

The first tightening means 9, 10 and the second tightening means 11 are switchable between:
- a free configuration, in which the electric cable 4 is movable along the first and second passage channel 3, 6; and
- a locking configuration, in which the electric cable 4 is locked in a fixed position along the first and second passage channel 3, 6.

It cannot however be ruled out that in the free configuration, both the first tightening means 9, 10 and the second tightening means 11 be partially activated, i.e. that the first stretch 13 be partially screwed onto the second coupling portion 8 and that the second closure element 15 be partially screwed onto the second stretch 14.

It is easy to appreciate that in such condition the electric cable 4 is in any case free along the first and the second passage channels 3, 6, despite the first tightening means 9, 10 and the second tightening means 11 being partially activated.

In other words, unless the first closure element 12 is fully screwed onto the first body 2 and the second closure element 15 is fully screwed onto the first closure element 12, the electric cable 4 is movable along the first and the second passage channels 3, 6.

In the locking configuration, however, the first closure element 12 is fully screwed onto the first body 2 and the second closure element 15 is fully screwed onto the first closure element 12.

In the preferred embodiment shown in the illustrations, the second tightening means 11 comprise at least a yielding regulator element 11 having a first ending part 18 associated with the second stretch 14 and a second free ending part 19 movable towards the longitudinal axis of the first closure element 12.

As can be seen from the illustrations, the yielding regulator element 11 extends in the circumferential direction along at least a circumferential arc of the surface of the second stretch 14.

In other words, the regulator element 11 is substantially a portion of the surface of the second stretch 14 yielding at the first ending part 18 with respect to the surface of the second stretch 14 by means of the second ending part 19 which, being free, gives flexibility to the regulator element itself.

More in detail, during the switching between the free configuration and the locking configuration, the second ending part 19 is movable towards the longitudinal axis of the first closure element 12.

The regulator element 11 comprises:
- a first side 20 which is turned towards the second passage channel 6 and is provided with at least an abutment edging 21 adapted to keep the electric cable 4 in a fixed position with respect to the second stretch 14 in the locking configuration; and
- a second side 22, opposite to the first side 20, and having at least a fin 23 with an outwardly protrusion growing from the first ending part 18 to the second ending part 19.

In particular, the fin 23 has a substantially orthogonal orientation with respect to the second side 22.

More in detail, the fin 23 is coupleable with the thread of the second closure element 15 during the screwing of the second closure element 15 with the first closure element 12.

Furthermore, the growing protrusion of the fin 23 towards the outside from the first ending part 18 to the second ending part 19 is such as to allow the correct screwing of the second closure element 15 onto the first closure element 12.

In the preferred embodiment shown in the illustrations, the second side 22 has a plurality of fins 23 arranged in succession along the longitudinal axis of the first closure element 12 and having growing protrusions relative to each other towards the first stretch 13.

In the case in question, the fin 23 farthest from the first stretch 13 has a lesser protrusion, on average, than the fin 23 arranged closer to the first stretch 13.

It can be clearly appreciated that the protrusion between one fin 23 and the other with respect to the second side 22 is growing towards the first stretch 13 so as to allow the gradual screwing of the second closure element 15 onto the first closure element 12.

Furthermore, during such screwing, the second ending part 19 and the first side 20 gradually come closer to the longitudinal axis of the first closure element 12 for the regulation of the diameter of the second passage channel 6 and the maintaining of the electric cable 4 locked in a fixed position along the second passage channel 6 in the locking configuration.

Usefully, the fins 23 are associated with the second side 22 so that the pitch between one fin 23 and the next is substantially coincident with the pitch defined by the thread of the outer surface of the second stretch 14.

Preferably, the second tightening means 11 comprise a pair of regulator elements 11 substantially opposite to each other so that, during the screwing of the second closure element 15 onto the first closure element 12, the two second free ending parts 19 are movable in a direction of approach the one to the other towards the longitudinal axis of the first closure element 12 for the regulation of the diameter of the first closure element itself.

Furthermore, the abutment edgings 21 of each of the regulator elements 11 come into contact with the body of the electric cable 4, respectively, from opposite sides the one to the other.

In this regard, the grip of the second tightening means 11 on the electric cable 4 is particularly firm and strong.

Alternative embodiments cannot however be ruled out wherein the second tightening means 11 comprise a plurality of regulator elements 11 arranged on the second stretch 14 so that in the locking configuration they are spaced sufficiently to avoid colliding with one another.

It has in practice been ascertained that the described invention achieves the intended objects and in particular the fact is underlined that the cable gland device made this way ensures utmost seal and locking of the electric cable by means of the first and second tightening means even in particularly heavy-duty operating conditions in which the electric cables undergo traction forces of high intensity, thus preventing the electric cable from coming away from the device itself.

In particular, the screwing of the second closure element onto the first closure element, following the activation of the first tightening means defined in the first body, makes the locking of the electric cable and the power connection with another electric cable particularly strong.

## Claims

1. A cable gland device (1) for the electric interconnection of electric cables, comprising:
- at least a first body (2) made of an electrically insulating material comprising:
- at least a first passage channel (3) of at least an electric cable (4); and
- first tightening means (9, 10) of said electric cable (4) inside said first passage channel (3);
- at least a second body (5) made of an electrically insulating material which comprises at least a second passage channel (6) of said electric cable (4) and is coupleable to said first body (2) for the activation of said first tightening means (9, 10);
wherein that said second body (5) comprises second tightening means (11) of said electric cable (4) inside said second passage channel (6);
wherein said second body (5) comprises:
- at least a first closure element (12) having:
- at least a first stretch (13) coupleable to said first body (2) and adapted to activate said first tightening means (9, 10); and
- at least a second stretch (14) having said second tightening means (11);
- at least a second closure element (15) coupleable to said second stretch (14) and adapted to activate said second tightening means (11);
wherein said second tightening means (11) comprise at least a yielding regulator element (11) having a first ending part (18) associated with said second stretch (14) and a second free ending part (19) movable towards the longitudinal axis of said first closure element (12) and by the fact that said yielding regulator element (11) extends in the circumferential direction;
wherein said first tightening means (9, 10) and said second tightening means (11) are switchable between:
- a free configuration, in which said electric cable (4) is movable along said first and second passage channel (3, 6); and
- a locking configuration, in which said electric cable (4) is locked along said first and second passage channel (3, 6);
wherein said regulator element (11) comprises:
- a first side (20) facing said second passage channel (6) and having at least an abutment edging (21) adapted to keep said electric cable (4) in a fixed position with respect to said second stretch (14) in said locking configuration; and
- a second side (22) opposite to said first side (20) and having at least a fin (23) with an outwardly protrusion growing from said first ending part (18) to said second ending part (19), said fin (23) being coupleable with the thread of said second closure element (15);
**characterized by** the fact that said second side (22) has a plurality of said fins (23) arranged in succession along the longitudinal axis of said first closure element (12) and having growing protrusions relative to each other towards said first stretch (13).

2. The device (1) according to claim 1, **characterized by** the fact that said first tightening means (9, 10) comprise a plurality of elastically yielding flanges (9) which extend parallel to the longitudinal axis of said first body (2).

3. The device (1) according to claim 2, **characterized by** the fact that said first tightening means (9, 10) comprise at least an elastically deformable reducer element (10) arranged at said flanges (9) and adapted to adhere to the body of said electric cable (4).

4. The device (1) according to one or more of the preceding claims, **characterized by** the fact that said first body (2) and said first stretch (13) have complementary threads for the screwing of said first closure element (12) to said first body (2), and by the fact that said second closure element (15) and said second stretch (14) have complementary threads for the screwing of said second closure element (15) to said first closure element (12).

5. The device (1) according to one or more of the preceding claims, **characterized by** the fact that said first body (2) comprises at least a first abutment protrusion (16) defined at the relative thread and by the fact that said first stretch (13) comprises at least a second abutment protrusion (17) defined at the relative thread, said abutment protrusions (16, 17) being adapted to hinder the unscrewing of said first closure element (12) from said first body (2).

## Patentansprüche

1. Kabelverschraubungsvorrichtung (1) für die elektrische Verbindung von elektrischen Kabeln, umfassend:
- mindestens einen ersten Körper (2) aus einem elektrisch isolierenden Material, umfassend:
- mindestens einen ersten Durchgangskanal (3) von mindestens einem elektrischen Kabel (4); und
- erste Spannmittel (9, 10) des elektrischen Kabels (4) innerhalb des ersten Durchgangskanals (3);
- mindestens einen zweiten Körper (5) aus einem elektrisch isolierenden Material, der mindestens einen zweiten Durchgangskanal (6) des elektrischen Kabels (4) aufweist und mit dem ersten Körper (2) zur Aktivierung der ersten Spannmittel (9, 10) koppelbar ist;
wobei der zweite Körper (5) zweite Spannmittel (11) des elektrischen Kabels (4) innerhalb des zweiten Durchgangskanals (6) umfasst;
wobei der zweite Körper (5) umfasst:
- mindestens ein erstes Verschlusselement (12) aufweisend:
- mindestens einen ersten Abschnitt (13), der mit dem ersten Körper (2) koppelbar ist und geeignet ist, die ersten Spannmittel (9, 10) zu aktivieren; und
- mindestens einen zweiten Abschnitt (14) mit den zweiten Spannmitteln (11);
- mindestens ein zweites Verschlusselement (15), das mit dem zweiten Abschnitt (14) koppelbar ist und geeignet ist, die zweiten Spannmittel (11) zu aktivieren;
wobei die zweiten Spannmittel (11) mindestens ein nachgiebiges Reglerelement (11) mit einem ersten Endteil (18) umfassen, das mit dem zweiten Abschnitt (14) verbunden ist, und einem zweiten freien Endteil (19), das in Richtung der Längsachse des ersten Verschlusselements (12) beweglich ist, und durch die Tatsache, dass sich das nachgiebige Reglerelement (11) in Umfangsrichtung erstreckt;
wobei das die ersten Spannmittel (9, 10) und die zweiten Spannmittel (11) umschaltbar sind zwischen:
- einer freien Konfiguration, in der das elektrische Kabel (4) entlang des ersten und zweiten Durchgangskanals (3, 6) beweglich ist; und
einer Verriegelungskonfiguration, in der das elektrische Kabel (4) entlang des ersten und zweiten Durchgangskanals (3, 6) verriegelt ist;
wobei das Reglerelement (11) umfasst:
- eine erste Seite (20), die dem zweiten Durchgangskanal (6) zugewandt ist und mindestens eine Anschlagkante (21) aufweist, die geeignet ist, das elektrische Kabel (4) in einer festen Position in Bezug auf den zweiten Abschnitt (14) in der Verriegelungskonfiguration zu halten; und
- eine zweite Seite (22), die der ersten Seite (20) gegenüberliegt und mindestens eine Rippe (23) mit einem nach außen gerichteten Vorsprung aufweist, der von dem ersten Endteil (18) zu dem zweiten Endteil (19) wächst, wobei die Rippe (23) mit dem Gewinde des zweiten Verschlusselements (15) koppelbar ist;
**gekennzeichnet durch** die Tatsache, dass die zweite Seite (22) eine Vielzahl der Rippen (23) aufweist, die nacheinander entlang der Längsachse des ersten Verschlusselements (12) angeordnet sind und wachsende Vorsprünge relativ zueinander in Richtung des ersten Abschnitts (13) aufweisen.

2. Vorrichtung (1) nach Anspruch 1, **dadurch gekennzeichnet, dass** die ersten Spannmittel (9, 10) eine Vielzahl von elastisch nachgiebigen Flanschen (9) umfassen, die sich parallel zu der Längsachse des ersten Körpers (2) erstrecken.

3. Vorrichtung (1) nach Anspruch 2, **dadurch gekennzeichnet, dass** die ersten Spannmittel (9, 10) mindestens ein elastisch verformbares Reduzierelement (10) umfassen, das an den Flanschen (9) angeordnet ist und dazu geeignet ist, am Körper des elektrischen Kabels (4) zu haften.

4. Vorrichtung (1) nach einem oder mehreren der vorstehenden Ansprüche, **dadurch gekennzeichnet, dass** der erste Körper (2) und der erste Abschnitt (13) komplementäre Gewinde zum Verschrauben des ersten Verschlusselements (12) mit dem ersten Körper (2) aufweisen, und dass das zweite Verschlusselement (15) und der zweite Abschnitt (14) komplementäre Gewinde zum Verschrauben des zweiten Verschlusselements (15) mit dem ersten Verschlusselement (12) aufweisen.

5. Vorrichtung (1) nach einem oder mehreren der vorstehenden Ansprüche, **dadurch gekennzeichnet, dass** der erste Körper (2) mindestens einen ersten Anschlagsvorsprung (16) aufweist, der an dem relativen Gewinde definiert ist, und dass der erste Abschnitt (13) mindestens einen zweiten Anschlagsvorsprung (17) aufweist, der an dem relativen Gewinde definiert ist, wobei die Anschlagsvorsprünge (16, 17) dazu geeignet sind, das Abschrauben des ersten Verschlusselements (12) von dem ersten Körper (2) zu verhindern.

## Revendications

1. Dispositif (1) de presse-étoupe pour l'interconnexion électrique de câbles électriques, comprenant :
- au moins un premier corps (2) constitué d'un matériau électriquement isolant comprenant :
- au moins un premier canal de passage (3) d'au moins un câble électrique (4) ; et
- des premiers moyens de serrage (9, 10) dudit câble électrique (4) à l'intérieur dudit premier canal de passage (3) ;
- au moins un second corps (5) constitué d'un matériau électriquement isolant qui comprend au moins un second canal de passage (6) dudit câble électrique (4) et peut être couplé audit premier corps (2) pour l'activation desdits premiers moyens de serrage (9, 10) ;
dans lequel ledit second corps (5) comprend des seconds moyens de serrage (11) dudit câble électrique (4) à l'intérieur dudit second canal de passage (6) ;
dans lequel ledit second corps (5) comprend :
- au moins un premier élément de fermeture (12) ayant :
- au moins une première extension (13) pouvant être couplée audit premier corps (2) et adaptée pour activer lesdits premiers moyens de serrage (9, 10) ; et
- au moins une seconde extension (14) ayant lesdits seconds moyens de serrage (11) ;
- au moins un second élément de fermeture (15) pouvant être couplé à ladite seconde extension (14) et adapté pour activer lesdits seconds moyens de serrage (11) ;
dans lequel lesdits seconds moyens de serrage (11) comprennent au moins un élément régulateur (11) de fléchissement ayant une première partie terminale (18) associée à ladite seconde extension (14) et une seconde partie terminale (19) libre mobile vers l'axe longitudinal dudit premier élément de fermeture (12) et par le fait que ledit élément régulateur (11) de fléchissement s'étend dans la direction circonférentielle ; dans lequel lesdits premiers moyens de serrage (9, 10) et lesdits seconds moyens de serrage (11) peuvent être permutés entre :
- une configuration libre, dans laquelle ledit câble électrique (4) est mobile le long desdits premier et second canaux de passage (3, 6) ; et
- une configuration de verrouillage, dans laquelle ledit câble électrique (4) est verrouillé le long desdits premier et second canaux de passage (3, 6) ;
dans lequel ledit élément régulateur (11) comprend :
- un premier côté (20) face audit second canal de passage (6) et ayant au moins une bordure de butée (21) adaptée pour maintenir ledit câble électrique (4) dans une position fixe vis-à-vis de ladite seconde extension (14) dans ladite configuration de verrouillage ; et
- un second côté (22) opposé audit premier côté (20) et ayant au moins une ailette (23) avec une protubérance vers l'extérieur croissante de ladite première partie terminale (18) à ladite seconde partie terminale (19), ladite ailette (23) pouvant être couplée avec le filetage dudit second élément de fermeture (15) ;
**caractérisé par le fait que** ledit second côté (22) a une pluralité desdites ailettes (23) agencées en succession le long de l'axe longitudinal dudit premier élément de fermeture (12) et ayant des protubérances croissantes les unes par rapport aux autres vers ladite première extension (13).

2. Dispositif (1) selon la revendication 1, **caractérisé par le fait que** lesdits premiers moyens de serrage (9, 10) comprennent une pluralité de brides (9) de fléchissement élastique qui s'étendent parallèlement à l'axe longitudinal dudit premier corps (2).

3. Dispositif (1) selon la revendication 2, **caractérisé par le fait que** lesdits premiers moyens de serrage (9, 10) comprennent au moins un élément réducteur élastiquement déformable (10) agencé au niveau desdites brides (9) et adapté pour adhérer au corps dudit câble électrique (4).

4. Dispositif (1) selon une ou plusieurs des revendications précédentes, **caractérisé par le fait que** ledit premier corps (2) et ladite première extension (13) ont des filetages complémentaires pour le vissage dudit premier élément de fermeture (12) sur ledit premier corps (2), et **par le fait que** ledit second élément de fermeture (15) et ladite seconde extension (14) ont des filetages complémentaires pour le vissage dudit second élément de fermeture (15) sur ledit premier élément de fermeture (12).

5. Dispositif (1) selon une ou plusieurs des revendications précédentes, **caractérisé par le fait que** ledit premier corps (2) comprend au moins une première protubérance de butée (16) définie au niveau du filetage relatif et **par le fait que** ladite première extension (13) comprend au moins une seconde protubérance de butée (17) définie au niveau du filetage relatif, lesdites protubérances de butée (16, 17) étant adaptées pour entraver le dévissage dudit premier élément de fermeture (12) à partir dudit premier corps (2).
